# EUROPEAN PATENT APPLICATION

(11) **EP 1 087 161 A1**
(43) Date of publication of application: **28.03.2001**
(21) Application number: 00203252.2
(22) Date of filing: 18.09.2000
(51) Int. Cl.: F16L 5/02, F16L 5/10, F16L 41/08

(54) **Mounting gasket**

(30) Priority: 20.09.1999 NL 1013095
(71) Applicant: DTM-Products B.V., 6021 DA Budel (NL)
(72) Inventor: de Werdt, Erik M.M., 6021 ZG Budel (NL)
(74) Representative: Timmermans, Anthonius C.Th., Ir.

(57) **Abstract**

The invention relates to a mounting gasket (1) including a ring opening (1a) and also including, on a first side, at least one first upright edge having a first outside diameter, which is provided all round, substantially adjacently to the ring opening, which mounting gasket is suitable for being fitted round an opening formed in a surface (2) so as to provide a sealing fit between the wall of said opening in said surface and a product extending through said opening in said surface and said ring opening.

According to the invention, the mounting gasket is characterized in that it includes at least one second, upright edge having a second outside diameter that is different from said first outside diameter.

The invention furthermore relates to a retaining ring which is capable of cooperation with a mounting gasket according to the invention.

## Description

The invention relates to a mounting gasket including a ring opening and also including, on a first side, at least one first upright edge having a first outside diameter, which is provided all round, substantially adjacently to the ring opening, which mounting gasket is suitable for being fitted round an opening formed in a surface so as to provide a sealing fit between the wall of said opening in said surface and a product extending through said opening in said surface and said ring opening.

The invention furthermore relates to a retaining ring, which is capable of cooperation with a mounting gasket according to the invention.

Mounting gaskets of the kind referred to in the introduction are generally known, they are available in various types and sizes and they are very suitable for sealingly mounting a product, for example the housing of an aerial, through the opening in a surface, for example the roof of a vehicle. Usually the diameters of the ring opening and the roof opening are more or less the same and the aerial part fits both openings.

Mounting gaskets of this kind cannot be used in surface openings having a larger diameter, however, since they are not capable of sealing this opening adequately, due to their generally smaller dimension. The drawback of using a non-accessory, larger mounting gasket is generally the fact that the larger ring opening of such a mounting gasket allows the product that extends through the ring opening to shift within said ring opening, which consequently leads to an inadequate seal against moisture, for example.

The object of the invention is to obviate the aforesaid drawbacks and to provide a mounting gasket which can be used for being fitted round openings of varying diameter that are present in a surface, whilst retaining an adequate seal, and which cannot shift. According to the invention, the mounting gasket is characterized in that it includes at least one second, upright edge having a second outside diameter that is different from said first outside diameter. The second upright edge makes the mounting gasket bifunctional, that is, suitable for being fitted round openings of varying diameter that are present in a surface. Consequently there is no need to substitute the mounting gasket for another off-size or not properly fitting mounting gasket, thus preventing a bad seal due to said poor fit of the gasket or to shifting of the product to be mounted.

In one specific embodiment the upright edge is formed on the other side of the mounting gasket.

In accordance with the invention the mounting gasket can be characterized in that the outside diameter of the first or the second upright edge is capable of cooperation with the wall of a corresponding opening formed in said surface. This feature makes the mounting gasket self-aligning whilst providing an additional provision for preventing the mounting gasket from shifting.

The invention furthermore relates to a retaining ring intended for cooperation with a mounting gasket according to the invention, which retaining ring is likewise provided with an opening. Retaining rings of this kind are likewise fitted round the product that extends through the opening in the surface and the opening in the mounting gasket, they function to confine the mounting gasket and hold it down on the surface so as to help provide an adequate seal. In order to provide an optimum cooperation with the mounting gasket according to the invention, the retaining ring according to the invention is characterized in that material has been removed from the side of the retaining ring that faces the mounting gasket so as to make it possible to receive the first and/or the second upright edge of the mounting gasket. As a result of this, the retaining ring will not cause the mounting gasket to deform when mounting takes place, thus preventing the seal from being weakened.

In order to obtain an optimum confinement of the mounting gasket and prevent deformation thereof and thus a reduced sealing effect, the retaining ring according to the invention is characterized in that said first and/or said second upright edge of the mounting gasket can be received in slots formed in the retaining ring.

In another embodiment, wherein a full confinement of the mounting gasket is obtained, the retaining ring includes an upright edge formed around its opening, the inside diameter of which is substantially the same as the outside diameter of the mounting gasket that cooperates therewith.

In a highly functional embodiment the retaining ring according to the invention is characterized in that the opening of the retaining ring is provided with internal screw thread. This enables quick and permanent mounting whilst providing an adequate sealing effect, wherein it is possible to refrain from using additional bolts or unions.

The invention will now be explained in more detail with reference to a drawing, which drawing successively shows in:
Figure 1, an embodiment of a mounting gasket and a retaining ring according to the invention in a first mounting position;
Figure 2, the mounting gasket and the retaining ring of Figure 1 in another mounting position.

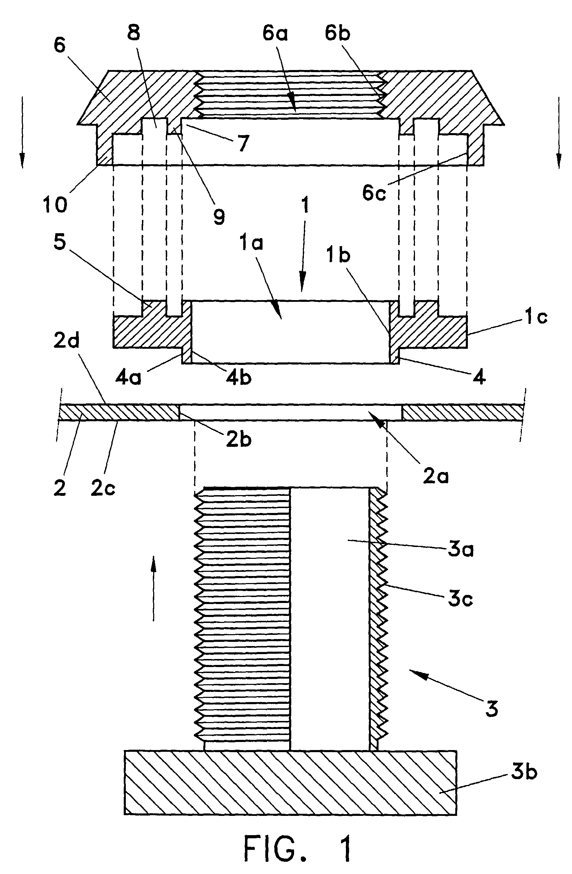

Figure 1 shows a mounting gasket 1 including a ring opening 1a, which mounting gasket can be fitted on a surface 2. Surface 2 may be the roof of a vehicle, for example. In this figure an opening 2a is present in roof 2, through which the housing 3 of for example a car aerial can extend. Aerial housing 3 is built up of an aerial part 3a extending through opening 2a and above roof 2, and a base part 3b, which will abut against the underside 2c of roof 2. Usually the projecting aerial part 3a is provided with screw thread 3c. The projecting aerial part 3a extends through opening 2a of roof 2, through ring opening 1a and through opening 6a of a retaining ring 6. The actual aerial can be inserted into aerial part 3a.

As is illustrated in Figure 1, the outside diameter of the projecting aerial part 3a is substantially the same as the inside diameter of the ring opening 1a, and ring wall 1b cooperates with the wall surface 3c of projecting aerial part 3a.

The mounting gasket is usually made of a flexible or hard plastic or rubber.

Furthermore the mounting gasket 1 is provided with an upright edge 4, which edge 4 extends into the opening 2a in surface 2 upon being fitted. Preferably the outside diameter of the upright edge 4 is substantially the same as the inside diameter of opening 2a. The outside wall 4a of upright edge 4 is thereby placed into abutment against wall 2b of opening 2a. When the mounting gasket 1 according to the invention having the dimensions as shown in Figure 1 is fitted round an opening 2a, a proper sealing fit can be obtained between the upper surface 2d of roof 2 and the mounting gasket on the one hand and the wall 2b of roof opening 2a and the outside wall 4a of the upright edge 4 on the other hand. In addition, the close fit of the projecting aerial part 3a through ring opening 1a provides a proper seal between the wall 1b of the opening and the wall surface 3c.

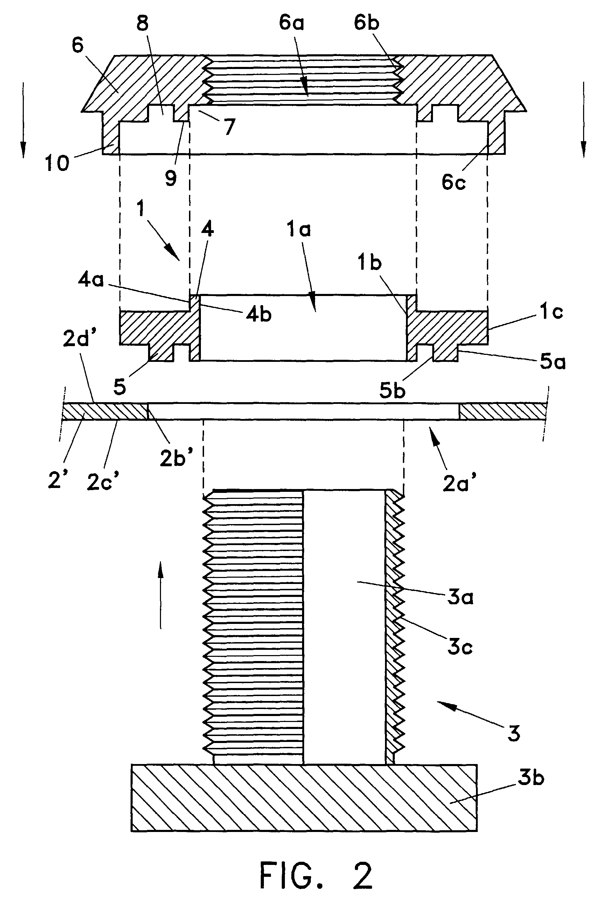

Sealing problems may arise when the mounting gasket 1 and the aerial housing 3 are mounted on a roof 2 provided with an opening 2a' having a larger diameter, as is shown in Figure 2. The non-corresponding or non-fitting dimensions of mounting gasket 1 and opening 2a', as well as the real risk of mounting gasket 1 and aerial housing 3 shifting in the opening 2a', which is too wide, provides an insufficiently adequate seal against moisture, for example. The use of a larger, non-accessory mounting gasket adapted to the dimensions of opening 2a' usually results in a discrepancy between the dimension of the larger mounting gasket and the dimension of the aerial part 3a, which likewise leads to an inadequate seal.

The mounting gasket according to the invention is intended to obviate this drawback, and to that end it is provided with a further upright edge 5. The upright edge 5 has an outside diameter that substantially corresponds to the inside diameter of larger opening 2a' in roof 2'. The outside wall 5a of upright edge 5 cooperates with the wall 2b' of opening 2a' thereby. Simple turning over of the mounting gasket makes it possible to use the mounting gasket in openings (2a and 2a', respectively) of varying diameter. As a result, it is no longer necessary to use another mounting gasket adapted to the dimension of opening 2a', thus preventing aerial part 3a from shifting in the opening and the occurrence of a bad seal caused by this inconsistent dimension of said other mounting gasket.

After all, the projecting aerial part 3a extends through opening 1a, whose inside diameter is substantially the same as the outside diameter of aerial part 3a.

Figures 1 and 2 furthermore show a retaining ring, which is capable of cooperation with the mounting gasket 1 according to the invention. Retaining ring 6 may be made of a metal or of plastic material and is provided with an opening 6a, through which the aerial part 3a will extend after being mounted. In this embodiment wall 6b of opening 6a is provided with internal screw thread, which can mate with the external screw thread 3c of aerial part 3a. This makes it possible to fit the aerial housing 3 and the retaining ring 6 firmly round opening 2a (2a') of roof surface 2 (2'), with the mounting gasket 1 positioned therebetween.

In order to ensure that the mounting gasket is properly confined and clamped down on surface 2, thus providing an adequate seal against moisture, for example, the retaining ring 6 is provided with slots 7 and 8, which are capable of receiving the upright edges 4 and 5, respectively, of mounting gasket 1. As a result of this arrangement there will be no deformation of the mounting gasket 1, which is usually made of a flexible material, which contributes to the sealing capacity of the mounting gasket. The upright edge 9 that is present between slots 7 and 8 functions to support the relatively thin upright edge 4.

Retaining ring 6 is furthermore provided with an upright edge 10, whose inside diameter is substantially the same as the maximum dimensions of mounting gasket 1. When retaining ring 6 is being fitted round mounting gasket 1, wall 6c of upright 10 will abut against the wall 1c of mounting gasket 1. Such complete confinement protects mounting gasket 1 against all kinds of outside influences, for example weather influences, and thus contributes to the seal that is provided between the mounting gasket and the side 2d (2d') of the roof surface 2 (2').

As is shown in Figures 1 and 2, retaining ring 6 is provided with internal screw thread 6b, by means of which the aerial housing 3 and the mounting gasket 1 can be firmly screwed down on roof 2.Wall 6b of opening 6a may be flat, so that an additional bolt or screw cap is required for screwing down the aerial housing 3 on roof surface 2.

## Claims

1. A mounting gasket including a ring opening and also including, on a first side, at least one first upright edge having a first outside diameter, which is provided all round, substantially adjacently to the ring opening, which mounting gasket is suitable for being fitted round an opening formed in a surface so as to provide a sealing fit between the wall of said opening in said surface and a product extending through said opening in said surface and said ring opening, **characterized in that** said mounting gasket includes at least one second, upright edge having a second outside diameter that is different from said first outside diameter.

2. A mounting gasket according to claim 1, **characterized in that** said second upright edge is formed on the other side of the mounting gasket.

3. A mounting gasket according to claim 1 or 2, **characterized in that** the outside diameter of said first or said second upright edge is capable of cooperation with the wall of a corresponding opening formed in said surface.

4. A mounting gasket according to any one of the preceding claims, **characterized in that** said first and said second upright edge have the same inside diameter.

5. A mounting gasket according to any one of the preceding claims, **characterized in that** the inside diameter of the second upright edge is larger than the ring opening.

6. A retaining ring intended for cooperation with a mounting gasket according to any one of the preceding claims, which retaining ring is likewise provided with an opening, **characterized in that** material has been removed from the side of the retaining ring that faces the mounting gasket so as to make it possible to receive the first and/or the second upright edge of the mounting gasket.

7. A retaining ring according to claim 6, **characterized in that** said first and/or said second upright edge of the mounting gasket can be received in slots formed in the retaining ring.

8. A retaining ring according to claim 6 or 7, **characterized in that** the retaining ring includes an upright edge formed round its opening, the inside diameter of which is substantially the same as the outside diameter of the mounting gasket that cooperates therewith.

9. A retaining ring according to any one of the claims 6 - 8, **characterized in that** the opening of the retaining ring is provided with internal screw thread.
